# EUROPÄISCHE PATENTSCHRIFT

(11) **EP 0 242 680 B1**
(45) Veröffentlichungstag und Bekanntmachung des Hinweises auf die Patenterteilung: **28.07.1993**
(21) Anmeldenummer: 87105020.9
(22) Anmeldetag: 04.04.1987
(51) Int. Cl.: G05D 23/13, F16K 11/00

(54) **Mischbatterie**
Mixing valve
Vanne mélangeuse

(30) Priorität: 17.04.1986 DE 3612988
(43) Veröffentlichungstag der Anmeldung: 28.10.1987
(73) Patentinhaber: FRIEDRICH GROHE AKTIENGESELLSCHAFT, D-58675 Hemer (DE)
(72) Erfinder: Kostorz, Jan Ryszard, D-5750 Menden 2 (DE); Kahle, Dieter, D-5860 Iserlohn (DE)

(56) Entgegenhaltungen:
- EP-A- 0 156 122
- DE-U- 8 520 276
- FR-A- 2 295 327
- GB-A- 2 052 019
- GB-A- 2 120 752
- US-A- 2 369 242
- US-A- 3 929 283
- US-A- 3 955 759

## Beschreibung

Die Erfindung betrifft eine thermostatgeregelte Mischbatterie, insbesondere zum Bereiten von temperiertem Warmwasser für Duschen, Badewannen, Waschbecken o.dgl., mit den im Oberbegriff des Anspruchs 1 angegebenen Merkmalen.
Eine derartige Mischbatterie ist beispielsweise aus der Druckschrift DE-OS 35 30 812 bekannt. Bei dieser Mischbatterie sind in einer Gehäusebohrung ein als Hülsenschieber ausgebildeter Ventilkörper zusammen mit einem als Dehnstoffelement ausgebildeten Thermostat angeordnet. Die Gehäusebohrung ist nach außen mit einem Kopfstück verschlossen, auf dem eine Temperaturvorwähleinrichtung gehaltert ist. Das an dem Ventilkörper befestigte Dehnstoffelement ist dabei mit einem Stößel koaxial durch das Kopfstück hindurchgeführt und wird mit Hilfe einer Rückstellfeder gegen die Temperaturvorwähleinrichtung gestrammt. Die Rückstellfeder ist hierbei stromabwärts hinter dem Warmwasserventilsitz im vom Mischwasser beaufschlagten Bereich angeordnet und wirkt über eine auf einem Zapfen verschiebbar angeordnete Druckhülse auf eine Stirnfläche des Thermostaten ein.

Bei dieser Mischbatterie kann es einerseits durch die Anordnung der Rückstelleinrichtung in dem vom Mischwasser beaufschlagten Raum zu Funktionsstörungen kommen, da Ablagerungen, Verkrustungen oder Korrosion in Verbindung mit dem Mischwasser an ihr entstehen können, die die Wirksamkeit beeinträchtigen. Andererseits ist es bei dieser Mischbatterie erforderlich, daß die einzelnen Ventilelemente bei der Montage oder Demontage im Gehäuse der Mischbatterie montiert werden, was insbesondere bei Reparaturen problembeladen sein kann. Es ist zwar auch bereits bekannt (DE-OS 32 39 772), die einzelnen Mischventilelemente in einer gesonderten Rohrbuchse anzuordnen und das Batteriegehäuse mit einer Aufnahmebohrung zu versehen, in welche die Rohrbuchse mit den Ventilelementen als eine Baueinheit einsetzbar ist. Eine derartige Rohrbuchse ist jedoch relativ aufwendig und mit zusätzlichen Kosten verbunden.

Der Erfindung liegt die Aufgabe zugrunde, die im Oberbegriff des Anspruchs 1 angegebene Mischbatterie zu verbessern, so daß insbesondere die von den zu- und abströmenden Medien beaufschlagten, dynamisch beanspruchten Teile verringert werden können und die einzelnen Ventilelemente ohne gesonderte Rohrbuchse zu einer Baueinheit zusammenfaßbar sind.

Diese Aufgabe wird erfindungsgemäß durch die im kennzeichnenden Teil des Anspruchs 1 angegebenen Merkmale gelöst.
Weitere Ausgestaltungen der Erfindung sind in den Ansprüchen 2 bis 6 angegeben.

Die mit der Erfindung erzielbaren Vorteile bestehen insbesondere darin, daß möglichst viele dynamisch beanspruchte Bauteile aus dem vom Medium durchfluteten Raum in günstigere Umfeldbedingungen verlagerbar sind und das thermostatisch geregelte Mischorgan ohne zusätzliche Rohrbuchse zu einer Baueinheit zusammengefaßt werden kann, so daß die Montage und Justierung der einzelnen Mischbatterien vereinfacht und insbesondere auch Reparaturen an bereits installierten Mischbatterien durch Auswechseln der gesamten Baueinheit wesentlich erleichtert ist.
Darüber hinaus ermöglicht die erfindungsgemäße Baueinheit eine äußerst kurze Bauweise. Zweckmäßig kann hierbei ein Rohrstück in das Batteriegehäuse einschraubbar angeordnet werden, wobei die eine Stirnseite des Rohrstücks als Warmwasserventilsitz und die andere Stirnseite als Ventilsitz für ein separates Ventil zur Regulierung der Gesamtdurchflußmenge ausgebildet sein kann.
Die erfindungsgemäße Baueinheit kann somit sowohl bei Wandaufputz- oder Unterputz-Mischbatterien als auch bei sogenannten Standbatterien auf Waschtischen etc. mit Einlochbefestigung verwendet werden.
Ein Ausführungsbeispiel der Erfindung ist in der Zeichnung dargestellt und wird im folgenden näher beschrieben. Es zeigt
- Figur 1: eine thermostatgeregelte Aufputzwand-Mischbatterie teilweise geschnitten;
- Figur 2: den thermostatgeregelten Mischventileinsatz gemäß Figur 1 in vergrößerter Darstellung im Längsschnitt

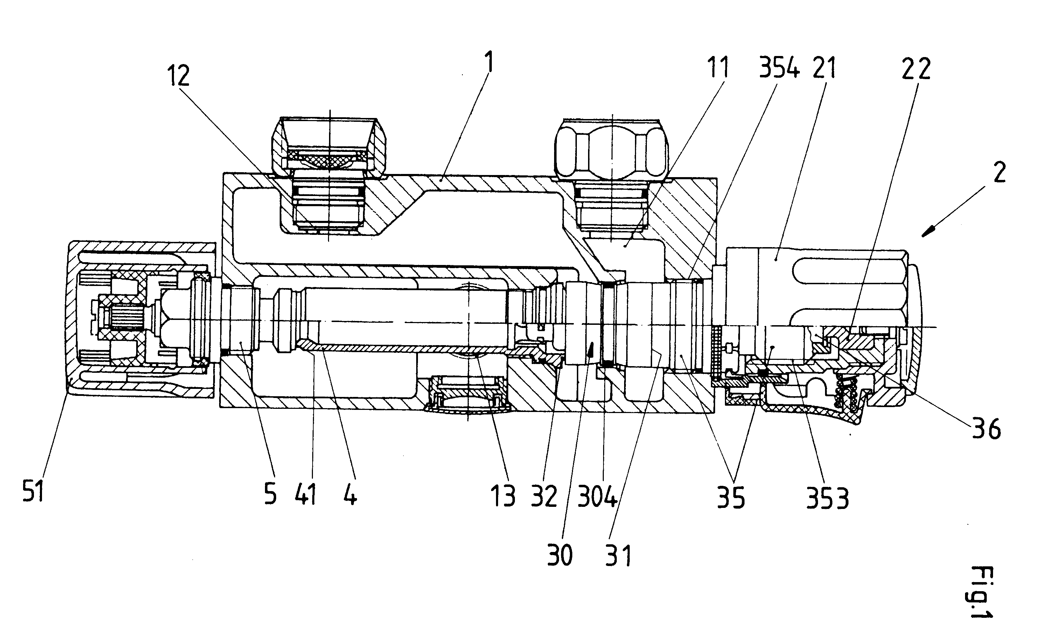

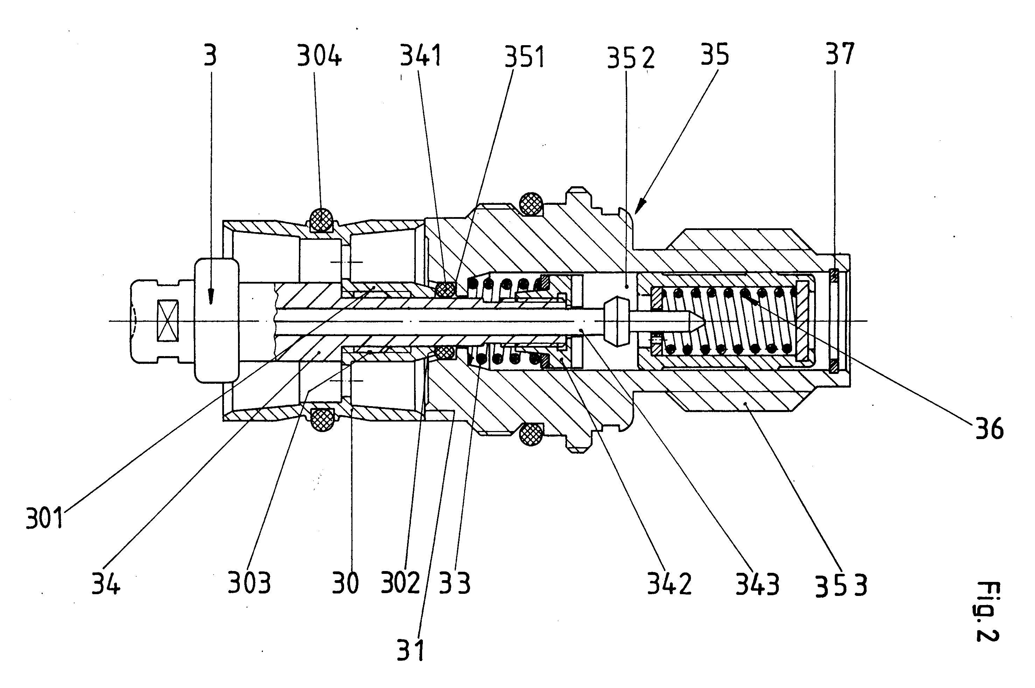

Die in Figur 1 dargestellte Mischbatterie weist ein Gehäuse 1 mit einer Zulauföffnung 11 für das Kaltwasser, einer Zulauföffnung 12 für das Warmwasser und einer Ablauföffnung 13 für das in der Mischbatterie erzeugte Mischwasser auf. Senkrecht zu den Zulauföffnungen 11,12 ist in einer Gehäusebohrung ein Ventilkörper 30 verschiebbar gelagert, wobei die Position des Ventilkörpers 30 zwischen einem Kaltwassersitz 31 und einem Warmwassersitz 32 von einer Temperaturvorwähleinrichtung 2 und einem in der Figur 2 gezeigten Thermostat 3 bestimmt wird. Der Kaltwassersitz 31 ist hierbei von der Stirnseite eines Kopfstücks 35 geformt, während der Warmwassersitz 32 von der rechten Stirnseite eines in das Gehäuse 1 eingeschraubten Rohres 4 gebildet ist.
Die gegenüberliegende Stirnseite des Rohrs 4 bildet einen Mischwasserventilsitz 41 für ein Mengenregulierventil 5 zur Bestimmung der Gesamtdurchflußmenge bzw. der Menge des austretenden Mischwassers aus der Ablauföffnung 13.
Der Ventilkörper 30 ist als Hülsenschieber ausgebildet, wie es insbesondere aus Figur 2 ersichtlich ist, und mit einer Habe 301 mittels Gewinde 303 auf einem Halte- und Führungsrohr 34 des Thermostaten 3 befestigt. Der Thermostat 3 ist dabei als Dehnstoffelement ausgebildet, das in Abhängigkeit von seiner Umgebungstemperatur einen in der Zeichnung nicht dargestellten Stößel auslenkt. Koaxial in dem Führungsrohr 34 ist eine Stange 343 verschiebbar gelagert, die an der einen Stirnseite an dem Stößel des Thermostaten 3 anliegt und andererseits aus dem Führungsrohr 34 zur Kontaktaufnahme mit der Temperaturvorwähleinrichtung herausgeführt ist.
Die Einheit von Thermostat 3 und Ventilkörper 30 ist mit dem Führungsrohr 34 in dem Kopfstück 35 verschiebbar gelagert. Hierbei ist an der dem Wasser zugekehrten Stirnseite konzentrisch in dem Kopfstück eine Einsenkung 351 ausgebildet, in der ein Dichtring 341 eingelagert ist. An der gegenüberliegenden Stirnseite des Kopfstücks 35 ist koaxial eine Senkbohrung 352 ausgebildet, in der eine Rückstellfeder 33 und eine Überlastsicherung 36 angeordnet sind. Die Rückstellfeder 33 wird dabei einerseits vom Grund der Senkbohrung 352 und andererseits von einer auf dem Führungsrohr 34 aufschraubbaren Ringmutter 342 abgestützt. Die Rückstellfeder 33 bewirkt, daß der Thermostat 3 zusammen mit dem Ventilkörper 30 in Richtung auf den Kaltwassersitz 31 gestrammt wird. Die Nabe 301 des Ventilkörpers 30 ist dabei so bemessen, daß die Ringschulter 302 den Dichtring 341 in der Einsenkung 351 sichert, wobei der Hub des Ventilkörpers 30 zwischen dem Kaltwassersitz 31 und dem Warmwassersitz 32 etwa einen Millimeter nicht überschreitet.

Die Ventilbaueinheit kann in folgender Weise montiert und benutzt werden:
Zunächst wird auf dem Führungsrohr 34 des Thermostats 3 der Ventilkörper 30 befestigt und der Dichtring 341 bis zur Anlage an der Ringschulter 302 aufgestreift. Hiernach wird das Kopfstück 35 auf das Führungsrohr 34 geschoben, wobei der Dichtring 341 in die Einsenkung 351 eindringt und das Führungsrohr 34 im Kopfstück 35 dichtet und lagert. Nunmehr kann von der entgegengesetzten Stirnseite in die Senkbohrung 352 die Rückstellfeder 33 bis in den Grund eingeschoben werden und mit Hilfe der Ringmutter 342 entsprechend vorgespannt werden, so daß der Ventilkörper 30 an dem Kaltwassersitz 31 fest anliegt. Danach kann die Stange 343 in das Führungsrohr 34 eingeschoben werden, worauf dann die überlastsicherungseinheit 36 in die Senkbohrung 352 eingelegt wird.
Hiernach wird die Senkbohrung 352 mit einem Sprengring 37 gesichert, so daß nunmehr eine insichgeschlossene Baueinheit erstellt ist.

Diese Baueinheit kann nun z.B. in ein mit Anschlußverschraubungen, einem Rohr 4 sowie einem Mengenregulierventil 5 versehenen Gehäuse 1 in eine Aufnahmebohrung eingeführt und mit einem Befestigungsgewinde des Kopfstücks 35 gedichtet befestigt werden. Der Ventilkörper 30 liegt in dieser Lage mit einem Dichtring 304 in einer koaxialen Bohrung einer Trennwand zwischen den beiden Zulauföffnungen 11 und 12. Die koaxiale Führung des Ventilkörpers 30 in der Aufnahmebohrung wird somit durch die beiden Dichtringe 304 und 341 bewirkt.
Sodann kann auf den aus dem Gehäuse 1 vorkragenden Teil des Kopfstücks 35 die Temperaturvorwähleinrichtung 2 aufgesetzt werden. Die Temperaturvorwähleinrichtung 2 ist dabei entsprechend der Druckschrift DE-OS 35 30 812 ausgebildet, so daß eine detaillierte Beschreibung nicht erforderlich erscheint. Hierbei wird eine Drehbewegung einer Griffhaube 21 mit Hilfe des Stellgewindes 353 in eine Axialbewegung eines Druckstücks 22 umgewandelt, wobei die Axialbewegung des Druckstücks 22 von der Überlastsicherung 36 auf die Stange 343, den Thermostaten 3 und den Ventilkörper 30 übertragen wird, so daß in Abhängigkeit von der Drehstellung der Griffhaube 21 die Position des Ventilkörpers 30 zwischen dem Kaltwassersitz 31 und dem Warmwassersitz 32 bestimmt werden kann.
Wird nun das Gehäuse 1 an die Kalt- und Warmwasserversorgungsleitung angeschlossen und mit einem Drehgriff 51 das Mengenregulierventil 5 geöffnet, so treten entsprechende Mengen von Kalt- und Warmwasser durch die Einlaßspalten zwischen dem Ventilkörper 30 und dem Warmwassersitz 32 und dem Kaltwassersitz 31 ein und bilden temperiertes Mischwasser. Weicht die tatsächliche Temperatur des erzeugten Mischwassers von der mit der Temperaturvorwähleinrichtung 2 eingestellten Sollwerttemperatur ab, so erfährt der Stößel des Thermostaten eine entsprechende Auslenkung und verschiebt somit den Ventilkörper 30, wodurch die Einlaßquerschnitte sich verändern, bis sich die Isttemperatur des Mischwassers der Sollwerttemperatur angenähert hat.

Der vorstehend beschriebene Ventileinsatz mit der Temperaturvorwähleinrichtung 2 kann selbstverständlich auch in anderen Batteriegehäusen, wie z.B. in einem UnterputzBatteriegehäuse oder in einem Gehäuse einer Waschtischbatterie mit Einlochbefestigung, angeordnet werden. Hierbei kommt der Vorteil der sehr kurzen Bauweise des Ventileinsatzes noch stärker zum Tragen. Das Rohr 4 kann hierbei auf einen sehr kurzen Gewindering reduziert werden, so daß die Gehäuse relativ flach bzw. schmal ausgebildet werden können.
Ferner kann der in Figur 2 gezeigte Ventileinsatz z.B. durch Reduzierung der Länge des Ventilkörpers 30 noch weiter verkürzt werden. Auch kann das Führungsrohr unmittelbar an dem Ventilkörper 30 ausgebildet sein und der Thermostat mit einem Zapfen durch das Führungsrohr hindurchgeführt und an der gegenüberliegenden Seite mit einer Mutter verspannt sein, wobei die Mutter dann ebenfalls gleichzeitig als Widerlager für die Rückstellfeder dient.

## Patentansprüche

1. Thermostatgeregelte Mischbatterie, insbesondere zum Bereiten von temperiertem Warmwasser für Duschen, Badewannen, Waschbecken o.dgl., mit einem wenigstens je eine Zulauföffnung (11,12) für das kalte und warme Medium sowie einer Ablauföffnung (13) für das gemischte Medium aufweisenden Gehäuse (1) in welchem ein von einer Temperaturvorwähleinrichtung (2) stellbarer Thermostat (3) vorgesehen ist, der mit einem zwischen zwei Ventilsitzen für das kalte und warme Medium verschiebbaren Ventilkörper (30) gekoppelt ist, wobei der Thermostat (3) zusammen mit dem Ventilkörper (30) von einer Rückstellfeder (33) gegen die Temperaturvorwähleinrichtung (2) gestrammt ist, dadurch gekennzeichnet, daß die aus dem Thermostaten (3) und dem Ventilkörper (30) gekoppelte Einheit mit einem Halte- und Führungsrohr (34) in einem in das Gehäuse (1) einsetzbaren Kopfstück (35) gedichtet und axial begrenzt verschiebbar gelagert ist, wobei die Rückstellfeder (33) in einem Bereich des Halte- und Führungsrohrs (34) angeordnet ist, der nicht von den zu- und abströmenden Medien beaufschlagt ist.

2. Thermostatgeregelte Mischbatterie nach Anspruch 1, dadurch gekennzeichnet, daß das Halte- und Führungsrohr (34) an dem Thermostaten (3) ausgebildet ist und der Ventilkörper (30) auf dem Führungsrohr (34) befestigt ist, wobei zur Abdichtung und Lagerung des Führungsrohres (34) ein Dichtring (341) in einer vom zuströmenden Medium beaufschlagten Einsenkung (351) im Kopfstück (35) vorgesehen ist, der durch eine Ringschulter (302) an einer Nabe (301) des Ventilkörpers (30) im Bereich der Einsenkung (351) gesichert ist.

3. Thermostatgeregelte Mischbatterie nach Anspruch 1, dadurch gekennzeichnet, daß das Halte- und Führungsrohr am Ventilkörper ausgebildet ist und der Thermostat mit einem Zapfen in das Führungsrohr einführbar und mit einer Mutter gedichtet befestigbar ist, wobei zur Abdichtung und Lagerung des Führungsrohres ein Dichtring (341) in einer vom zuströmenden Medium beaufschlagten Einsenkung (351) im Kopfstück (35) vorgesehen ist, der durch eine Ringschulter des Ventilkörpers im Bereich der Einsenkung (351) gesichert ist.
Thermostatgeregelte Mischbatterie nach einem der

4. Ansprüche 1 bis 3, dadurch gekennzeichnet, daß in dem Kopfstück (35) an der zum Ventilkörper (30) abgekehrten Stirnseite eine Senkbohrung (352) zur Aufnahme der Rückstellfeder (33) und einer Überlastsicherung (36) ausgebildet ist, wobei die Rückstellfeder (33) sich einerseits im Grund der Senkbohrung (352) und andererseits an einer auf dem Führungsrohr (34) oder dem Zapfen aufschraubbaren Ringmutter (342) abstützt.

5. Thermostatgeregelte Mischbatterie nach einem der Ansprüche 1 bis 4, dadurch gekennzeichnet, daß in dem Führungsrohr (34) oder dem Zapfen eine Stange (343) verschiebbar gelagert ist, die einerseits am Stößel des Thermostaten (3) und andererseits an der Überlastsicherung (36) anliegt.

6. Thermostatgeregelte Mischbatterie nach einem der Ansprüche 1 bis 5 mit einem am Kopfstück ausgebildeten Kaltwassersitz (31) und einem im Gehäuse (1) gehalterten Rohr (4), das mit der einen Stirnseite den Warmwassersitz (32) bildet, dadurch gekennzeichnet, daß das Rohr (4) an der dem Warmwassersitz (32) gegenüberliegenden Stirnseite als Mischwasserventilsitz (41) für ein Mengenregulierventil (5) zur Regulierung der Gesamtdurchflußmenge ausgebildet ist.

## Claims

1. Thermostat-controlled mixing tap, in particular for preparing hot water of moderated temperature for showers, baths, wash basins and so on, having a housing (1) containing at least one inlet opening (11, 12) for the cold and hot medium respectively and an outlet opening (13) for the mixed medium in which a thermostat (3) adjustable by means of a temperature pre-selecting device (2) is provided, the thermostat being coupled with a valve body (30) that is displaceable between two valve seats for the cold and hot medium, and the thermostat (3) together with the valve body (30) being urged by a restoring spring (33) against the temperature pre-selecting device (2), characterized in that the unit formed from the thermostat (3) and the valve body (30) with a holding and guiding tube (34) is sealed in a top piece (35) that is arranged to be inserted into the housing (1) and the unit is mounted so as to be displaceable axially to a limited extent, the restoring spring (33) being arranged in a region of the holding and guiding tube (34) which is not filled with the inflowing and outflowing media.

2. A thermostat-controlled mixing tap according to claim 1, characterized in that the holding and guiding tube (34) is formed at the thermostat (3) and the valve body (30) is secured to the guiding tube (34), wherein, in order to seal and mount the guiding tube (34), a sealing ring (341) is provided in a recess (351) filled by inflowing medium in the top piece (35), the sealing ring being secured by an annular shoulder (302) on a hub (301) of the valve body (30) in the region of the recess (351).

3. A thermostat-controlled mixing tap according to claim 1, characterized in that the holding and guiding tube is formed at the valve body and the thermostat is arranged to be inserted with a pin into the guiding tube and to be fixed in a sealed manner by means of a nut, wherein, in order to seal and mount the guiding tube, a sealing ring (341) is provided in a recess (351) filled by inflowing medium in the top piece (35), the sealing ring being secured by an annular shoulder of the valve body in the region of the recess (351).

4. A thermostat-controlled mixing tap according to one of claims 1 to 3, characterized in that in the top piece (35) at the end face remote from the valve body (30) there is constructed a recessed bore (352) for receiving the restoring spring (33) and a means for preventing overloading (36), the restoring spring (33) engaging at one end the bottom of the recessed bore (352) and at the other end an annular nut (342) which is arranged to be screwed onto the guiding tube (34) or the pin.

5. A thermostat-controlled mixing tap according to one of claims 1 to 4, characterized in that mounted in the guiding tube (34) or the pin so as to be displaceable there is a rod (343) which lies at one end against the plunger of the thermostat (3) and at the other end against the means for preventing overloading (36).

6. A thermostat-controlled mixing tap according to one of claims 1 to 5 with a cold water seat (31) formed on the top piece and a tube (4) mounted in the housing (1) which with its one end face forms the hot water seat (32), characterized in that at the end face lying opposite the hot water seat (32) the tube (4) is in the form of a mixed water valve seat (41) for a volume-controlling valve (5) for controlling the total volume flowing through.

## Revendications

1. Mélangeur thermostatique, notamment pour préparer de l'eau chaude à température pour les douches et baignoires, les lavabos ou analogues, comportant un boîtier (1) avec au moins un orifice d'alimentation respectif (11, 12) pour le fluide froid et le fluide chaud ainsi qu'un orifice de sortie (13) pour le fluide mélangé, boîtier comportant un thermostat (3) réglé par un présélecteur de température (2), ce thermostat étant couplé à un organe d'obturation (30) coulissant entre deux sièges de soupape pour le fluide froid et le fluide chaud, le thermostat (3) et l'organe d'obturation (30) étant poussés par un ressort de rappel (33) contre le présélecteur de température (2), mélangeur caractérisé en ce que l'ensemble formé par le thermostat (3) et l'organe d'obturation (30) est monté coulissant de manière limitée dans la direction axiale, de façon étanche avec un tube de fixation et de guidage (34) dans une pièce de tête (35) logée dans le boîtier (1), le ressort de rappel (33) étant situé dans une zone du tube de fixation et de guidage (34) non soumise à l'action des fluides d'alimentation et de sortie.

2. Mélangeur thermostatique selon la revendication 1, caractérisé en ce que le tube de fixation et de guidage (34) est réalisé sur le thermostat (3) et l'organe d'obturation (30) est fixé sur le tube de guidage (34), un joint d'étanchéité (341) étant prévu dans une cavité (351) de la pièce de tête (35) soumise à l'action du fluide d'arrivée, pour assurer l'étanchéité et le soutien du tube de guidage (34), la pièce de tête étant fixée par un épaulement annulaire (302) sur un moyeux (301) de l'organe d'obturation (30) au niveau de la cavité (351).

3. Mélangeur thermostatique selon la revendication 1, caractérisé en ce que le tube de guidage et de fixation est réalisé sur l'organe d'obturation et le thermostat s'introduit avec un téton dans le tube de guidage en y étant fixé de manière étanche par un écrou, un joint d'étanchéité (341) étant prévu dans une cavité (351) de la pièce de tête (35), cavité soumise à l'action du fluide qui arrive, pour assurer l'étanchéité et le maintien du tube de guidage, ce joint étant maintenu au niveau de la cavité (351) par un épaulement annulaire réalisé sur l'organe d'obturation.

4. Mélangeur thermostatique selon l'une des revendications 1 à 3, caractérisé en ce que la face frontale de la pièce de tête (35), opposée à l'organe d'obturation (30) comporte un trou borgne (352) pour recevoir le ressort de rappel (33) et est réalisée en forme de sécurité de surcharge (36), le ressort de rappel (33) s'appuyant d'une part contre le fond du trou borgne (352) et d'autre part contre un écrou annulaire (342) qui se visse sur le tube de guidage (34) ou le téton.

5. Mélangeur thermostatique selon l'une des revendications 1 à 4, caractérisé en ce qu'une tige (343) est montée de manière coulissante dans le tube de guidage (34) ou le téton, cette tige s'appuyant d'un côté contre le poussoir du thermostat (3) et d'autre part contre la sécurité de surcharge (36).

6. Mélangeur thermostatique selon l'une des revendications 1 à 5, comportant un siège (31) pour l'eau froide, réalisé sur la pièce de tête, et d'un tube (4) maintenu dans le boîtier (1), tube dont la face frontale forme le siège (32) pour l'eau chaude, mélangeur caractérisé en ce que la face frontale du tube (4) opposée au siège (32) de l'eau chaude est réalisée comme siège (41) pour l'eau mélangée, pour une vanne de régulation de débit (5) servant à réguler le débit total.
